# EUROPEAN PATENT APPLICATION

(11) **EP 2 722 384 A1**
(43) Date of publication of application: **23.04.2014**
(21) Application number: 12746253.9
(22) Date of filing: 23.01.2012
(51) Int. Cl.: C10M 169/04, C10M 129/10, C10M 129/20, C10M 129/24, C10M 137/04, C10M 159/02, F16C 19/00, F16C 19/06, F16C 29/00, F16C 31/00, F16C 33/66, C10N 30/08, C10N 30/10, C10N 40/02

(54) **LUBRICANT COMPOSITION AND ROLLING DEVICE**

(30) Priority: 15.06.2011 JP 2011133118; 30.11.2011 JP 2011262944; 30.11.2011 JP 2011262945
(71) Applicant: NSK Ltd., Tokyo 141-8560 (JP)
(72) Inventor: HACHIYA Koichi, Fujisawa-shi Kanagawa 251-8501 (JP); MORI Kanako, Fujisawa-shi Kanagawa 251-8501 (JP); YOKOUCHI Atsushi, Fujisawa-shi Kanagawa 251-8501 (JP)
(74) Representative: Grünecker, Kinkeldey, Stockmair & Schwanhäusser
(86) International application number: PCT/JP2012/051322
(87) International publication number: WO 2012/172824

(57) **Abstract**

The lubricant compositions of the invention include a saturated fatty acid triglyceride as a lubricating ingredient and further contain an antioxidant or a thickener which is magnesium stearate or calcium stearate. Consequently, the lubricant compositions are harmless even when eaten, have excellent lubricity, and impose little burden on the environment. The rolling device of the invention not only imposes little burden on the environment because the device is lubricated with either of these lubricant compositions, but also has excellent durability.

## Description

### Technical Field

The present invention relates to lubricant compositions. The invention further relates to a rolling device, e.g., a rolling bearing, ball screw, linear guide, or direct-acting bearing.

### Background Art

Lubricant compositions such as lubricating oils and greases have conventionally been used in the sliding parts or rotating or rolling parts of various machines and apparatus (see, for example, patent documents 1 to 3). However, most of the conventionally known lubricant compositions including those of patent documents 1 to 3 are not eatable, and there are few known lubricant compositions, among the lubricant compositions usable for lubricating machine parts including rolling bearings, that are harmless even when eaten.

There are frequently cases where oxidation inhibitors are added to lubricant compositions to improve the durability thereof, because the temperature of the lubricant compositions rises with operation of the rolling devices. The oxidation inhibitors for addition to lubricant compositions include the following. Frequently used for industrial applications are amine-based antioxidants, phenolic antioxidants, and phenothiazine. There are cases where tocopherol (vitamin E), dibutyl-p-cresol (DBPC), butylhydroxyanisole (BHA), butylhydroquinone (TBHQ), isopropyl gallate, and the like are used in machines for foods, although such cases are rare (see, for example, patent documents 4 to 6). However, there is considerable concern about environmental preservation, and there is a strong desire for a technique which imposes little environmental burden and, despite this, further enhances the effect of oxidation prevention.

### Prior-Art Documents

### Patent Documents

Patent Document 1: Japanese Patent No. 4730714
Patent Document 2: JP-T-2004-510020
Patent Document 3: JP-A-2007-64456
Patent Document 4: JP-A-2002-323053
Patent Document 5: JP-A-2008-248990
Patent Document 6: JP-A-4-72392

### Summary of the Invention

### Problems that the Invention is to Solve

An object of the invention, which has been achieved in view of the circumstances described above, is to provide lubricant compositions which are harmless even when eaten, have excellent lubricity, and impose little environmental burden and which, despite this, are highly prevented from oxidizing. Another object is to provide a rolling device which is lubricant with either of the lubricant compositions, imposes little environmental burden, and is excellent in terms of lubrication and durability.

### Means for Solving the Problems

The present invention provides the following lubricant compositions and rolling device in order to overcome those problems.
(1) A lubricant composition characterized by comprising a saturated fatty acid triglyceride and an antioxidant.
(2) The lubricant composition according to (1) above characterized in that the antioxidant comprises at least one member selected from phenols, polyphenols, flavonoids, carotenoids, vitamins, vitamin analogues, and organic acids.
(3) The lubricant composition according to (1) or (2) above characterized by containing a coenzyme Q.
(4) The lubricant composition according to any one of (1) to (3) above characterized by containing a fatty acid ester, a metal soap, or a urea compound as a thickener.
(5) A lubricant composition characterized by comprising a saturated fatty acid triglyceride as a base oil and either magnesium stearate or calcium stearate as a thickener.
(6) A rolling device equipped with an inner member which has a raceway surface in the outer surface thereof, an outer member which has a raceway surface that faces the raceway surface of the inner member and which has been disposed outside the inner member, a plurality of rolling elements which have been disposed between the two raceway surfaces so as to be freely rollable, and a lubricant which lubricates between each raceway surface and the rolling elements, characterized in that the lubricant is the lubricant composition according to any one of (1) to (5) above.

### Effects of the Invention

The lubricant compositions of the invention are harmless even when eaten, and impose little environmental burden. Despite this, the compositions are highly prevented from oxidizing. The rolling device of the invention has excellent durability, imposes little environmental burden, and causes no harm even when the lubricant composition is eaten.

### Brief Description of the Drawings

[Fig. 1] Fig. 1 is a sectional view which illustrates a deep-groove ball bearing as one embodiment of the rolling device of the invention.
[Fig. 2] Fig. 2 is a graph which shows the results of (Test 1) conducted in Example A.
[Fig. 3] Fig. 3 is a graph that shows the results of an examination in which the test greases of Examples 4A, 5A, and 6A and Comparative Examples 20A and 21A were examined for bearing life in (Test 2) in Example A.
[Fig. 4] Fig. 4 is a graph that shows the results of an examination in which the test greases of Examples 7A and 8A and Comparative Examples 22A and 23A were examined for bearing life in (Test 2) in Example A.
[Fig. 5] Fig. 5 is a graph which shows the results of a life test conducted in Example B.
[Fig. 6] Fig. 6 is a graph which shows the results of another life test conducted in Example B.
[Fig. 7] Fig. 7 is a graph which shows the results of still another life test conducted in Example B.
[Fig. 8] Fig. 8 is a graph which shows the results of Example C.
[Fig. 9] Fig. 9 is a graph which shows the results of Example D.

### Modes for Carrying Out the Invention

The invention will be explained below in detail.

### (Lubricant Compositions)

One of the lubricant compositions of the invention includes a saturated fatty acid triglyceride as a lubricating ingredient and an antioxidant as an oxidation inhibitor.

The saturated fatty acid triglyceride is an ester of one or more saturated fatty acids with glycerol, and has biodegradability. The kinds of the saturated fatty acids are not particularly limited. However, linear fatty acids are preferred, and saturated fatty acids having 6-12 carbon atoms are preferred. In case where the saturated fatty acids each have 5 or less carbon atoms, there is the possibility that the base oil might have insufficient heat resistance. In case where the saturated fatty acids each have more than 12 carbon atoms, there is the possibility that the base oil might have too high a viscosity. Preferred of those are saturated fatty acids having 8-12 carbon atoms. Even more preferred are saturated fatty acids having 8-10 carbon atoms. Such saturated fatty acids have excellent lubricity and are available on the market at relatively low cost.

One saturated fatty acid triglyceride may be used alone, or a plurality of saturated fatty acid triglycerides may be used as a mixture thereof. Furthermore, the saturated fatty acid triglyceride may be either a saturated fatty acid triglyceride obtained by the reaction of three molecules of one saturated fatty acid with one molecule of glycerol or a saturated fatty acid triglyceride obtained by the reaction of three molecules, in total, of two or three saturated fatty acids with one molecule of glycerol.

In the case where a plurality of saturated fatty acid triglycerides are used as a mixture thereof, it is preferred that the mixture should be a mixture of a saturated fatty acid triglyceride which is an ester of a saturated fatty acid having 8 carbon atoms with glycerol (referred to as saturated fatty acid triglyceride A) and a saturated fatty acid triglyceride which is an ester of a saturated fatty acid having 10 carbon atoms with glycerol (referred to as saturated fatty acid triglyceride B). In this case, the molar ratio of the saturated fatty acid triglyceride A to the saturated fatty acid triglyceride B (A:B) is preferably in the range of 60:40 to 90:10, more preferably in the range of 70:30 to 80:20. When the molar ratio is regulated so as to be within such a range, the lubricant composition has better chemical performance, e.g., heat resistance and durability, and better mechanical performance, not to mention better low-torque characteristics.

In the case where a saturated fatty acid triglyceride obtained by the reaction of three molecules, in total, of two or three saturated fatty acids with one molecule of glycerol is used, it is preferred that this triglyceride should be a saturated fatty acid triglyceride obtained by the reaction of three molecules, in total, of a saturated fatty acid having 8 carbon atoms and a saturated fatty acid having 10 carbon atoms with one molecule of glycerol. In this case, the molar ratio of the saturated fatty acid ingredient having 8 carbon atoms (C) to the saturated fatty acid ingredient having 10 carbon atoms (D) (C:D) is preferably in the range of 60:40 to 90:10, more preferably in the range of 70:30 to 80:20. When the molar ratio is regulated so as to be within such a range, the lubricant composition has better chemical performance, e.g., heat resistance and durability, and better mechanical performance, not to mention better low-torque characteristics.

The molar ratio (C:D) can be regulated, for example, by mixing, in a suitable proportion, a saturated fatty acid triglyceride obtained by the reaction of one molecule of the saturated fatty acid having 8 carbon atoms and two molecules of the saturated fatty acid having 10 carbon atoms with one molecule of glycerol and a saturated fatty acid triglyceride obtained by the reaction of two molecules of the saturated fatty acid having 8 carbon atoms and one molecule of the saturated fatty acid having 10 carbon atoms with one molecule of glycerol.

It is preferred that the saturated fatty acid triglyceride should have a dynamic viscosity at 40°C of 8-120 mm²/s. In case where the dynamic viscosity at 40°C thereof is less than 8 mm²/s, there is the possibility that the base oil might have insufficient heat resistance. In case where the dynamic viscosity at 40°C thereof exceeds 120 mm²/s, this base oil has increased shear resistance and there is the possibility that use of this lubricant composition in, for example, a rolling bearing might disadvantageously result in an increase in starting torque or rotation torque. From the standpoint of inhibiting such troubles from occurring, the dynamic viscosity at 40°C of the saturated fatty acid triglyceride is more preferably 8-50 mm²/s, even more preferably 10-35 mm²/s, most preferably 10-20 mm²/s.

It is preferred that the lubricant composition should consist only of one or more saturated fatty acid triglycerides or contain one or more saturated fatty acid triglycerides as the main component. However, another kind of oil which is used as a base oil in general lubricants may be mixed with the saturated fatty acid triglyceride(s) so long as the oil is incorporated in such an amount that the objects of the invention are accomplished. For example, a natural lubricating oil such as an animal or vegetable oil is preferred. Examples thereof include beef tallow, lard, soybean oil, rapeseed oil, rice bran oil, coconut oil, palm oil, and palm kernel oil or products of hydrogenation of these.

The antioxidant may be an antioxidant which is in use as a food additive. Thus, the lubricant composition or the rolling device, e.g., a rolling bearing, that is equipped with the lubricant composition is rendered usable in machines for foods, machines for medicines, etc. Examples of such antioxidant include phenols, polyphenols, flavonoids, carotenoids, vitamins, vitamin analogues, and organic acids.

Examples of the phenols include BHA, butylhydroxytoluene (BHT), and TBHQ.

Examples of the polyphenols include grape seed extract, proanthocyanidin, and oil-soluble catechins.

Examples of the flavonoids include soybean isoflavone.

Examples of the cateroids include β-carotene, lycopene, and astaxanthin.

Examples of the vitamins include vitamin A substances, vitamin B substances, vitamin C substances, vitamin D substances, vitamin E substances, and vitamin K substances. Examples of the vitamin A substances include retinal, retinol, retinoic acid, and dehydroretinal. Examples of the vitamin B substances include thiamine, thiamine disulfide, dicethiamine, octotiamine, cycotiamine, bisibuthiamine, bisbentiamine, prosultiamine, benfotiamine, fursultiamine, riboflavin, flavin adenine dinucleotide, pyridoxine, pyridoxal, hydroxocobalamin, cyanocobalamin, methylcobalamin, deoxyadenocobalamin, folic acid, tetrahydrofolic acid, dihydrofolic acid, nicotinic acid, nicotinamide, nicotinyl alcohol, pantothenic acid, panthenol, biotin, choline, and inositol.

Examples of the vitamin C substances include ascorbic acid and derivatives thereof and erythorbic acid and derivatives thereof. Examples of the vitamin D substances include ergocalciferol, cholecalciferol, hydroxycholecalciferol, dihydroxycholecalciferol, and dihydrotachysterol. Examples of the vitamin E substances include tocopherols, derivatives thereof, and ubiquinone derivatives. The tocopherols are not particularly limited, and examples thereof include d-α-tocopherol, d-β-tocopherol, d-γ-tocopherol, d-δ-tocopherol, and dl-α-tocopherol. A mixture of these tocopherols may be used. Examples of the vitamin K substances include phytonadione, menaquinone, menadione, menadiol, an extract of fermented soybeans, and an extract of *Bacillus natto.* Examples of other vitamin substances include carnitine, ferulic acid, γ-orizanol, orotic acid, rutin, eriocitrin, and hesperidin.

Examples of the vitamin analogues include thioctic acid (α-liboic acid) and ubiquinol.

Examples of the organic acids include phytic acid.

One of these antioxidants may be used alone, or a suitable combination of two or more thereof may be used. To use two or more thereof in combination further enhances the effect of preventing oxidation.

The content of the antioxidant in the lubricant composition is an amount with which the effect of preventing oxidation can be imparted. The content thereof can be regulated in accordance with the kind of the lubricating ingredient, use, etc. For example, in the case of a grease composition to be enclosed in bearings, a sufficient oxidation-preventing effect is obtained by incorporating the antioxidant in an amount of 0.1-10% by mass based on the whole grease.

It is preferred to add a coenzyme Q to the lubricant composition, because the addition thereof further enhances the oxidation-preventing effect. Although the kind of the coenzyme Q is not particularly limited, coenzyme Q10 is especially preferred. One coenzyme Q may be used alone, or a suitable combination of two or more coenzymes Q may be used.

Furthermore, a thickener may be incorporated to produce a grease composition. Examples of the thickener include metal soaps such as aluminum soaps, barium soaps, calcium soaps, lithium soaps, sodium soaps, lithium complex soaps, calcium complex soaps, and aluminum complex soaps. Also usable are urea compounds such as diurea, triurea, tetraurea, and polyurea, urethane compounds, urea-urethane compounds, sodium terephthalamate, and the like. Moreover, gellants, such as amino acid-based gellants and polysaccharide esters, are also usable.

Furthermore, a dextrin fatty acid ester, which is obtained from a fatty acid and dextrin, or an inulin fatty acid ester, which is obtained from a fatty acid and inulin, can also be used as a thickener. Since these esters are materials derived from natural substances, the burden to be imposed on the environment is lessened. It is, however, noted that in the case where a dextrin fatty acid ester or an inulin fatty acid ester is used, various bacteria are apt to propagate and the grease composition is apt to be deteriorated by the propagation of bacteria. This bacterial deterioration of the grease composition can be inhibited by using, as an antioxidant, thioctic acid in combination with at least one member selected from vitamin E substances and polyphenols.

It is preferred that the fatty acids of the dextrin fatty acid ester and inulin fatty acid ester should be saturated fatty acids having 6-24 carbon atoms. Examples thereof include hexanoic acid, heptanoic acid, octanoic acid, nonanoic acid, decanoic acid, dodecanoic acid, tetradecanoic acid, pentadecanoic acid, hexadecanoic acid, heptadecanoic acid, octadecanoic acid, nanodecanoic acid, icosanoic acid, docosanoic acid, and tetradocosanoic acid. Preferred of these are pentadecanoic acid, hexadecanoic acid, and heptadecanoic acid. It is preferred that these saturated fatty acids should have a linear structure.

Incidentally, dextrin is a saccharide formed by polymerizing a plurality of α-glucose molecules through glycoside bonds, and is generally obtained by hydrolyzing a starch. Inulin also is a polysaccharide, and is designated as CAS No. 9005-8-5. Consequently, these substances exert no influence on the environment.

The amount of the thickener is not limited so long as the saturated fatty acid triglyceride can be thickened thereby, and the amount thereof can be suitably set in accordance with the desired worked consistency, torque, etc. However, the amount thereof is preferably 10-40% by mass based on the whole grease.

In the case where a grease composition is to be produced, it is also possible to use a saturated fatty acid triglyceride as a base oil and either magnesium stearate or calcium stearate as a thickener. It is preferred that the magnesium stearate and the calcium stearate to be used each should be of a food additive or medicine additive grade which meets standards such as the Japanese Standards for Food Additives or the Japanese Pharmacopoeia.

The content of the magnesium stearate or calcium stearate in the grease composition is not particularly limited. However, the content thereof is preferably 12-35% by mass. So long as the content thereof is within that range, the grease composition, when applied to a rolling device, can be inhibited from leaking out from the sliding part or rolling part. As a result, the rolling device can be lubricated over a long period. In case where the content thereof is less than 12% by mass, this grease composition has reduced shear stability and, hence, there is the possibility that this grease composition, when applied to a rolling device, might be softened by shearing in the sliding part or rolling part to accelerate the leakage of the grease composition from the sliding part or rolling part. As a result, there is the possibility that the rolling device cannot be lubricated over a long period. On the other hand, in case where the content of the thickener exceeds 35% by mass, the proportion of the base oil in the grease composition is low and, hence, there is the possibility that this grease composition might have insufficient lubricity. From the standpoint of inhibiting such troubles from occurring, the content of the thickener in the grease composition is more preferably 12-28% by mass, even more preferably 12-25% by mass, most preferably 15-25% by mass.

Additives which are in general use in lubricants may be further added to the lubricant composition in order to further improve the various performances of the lubricant composition. Examples thereof include rust preventives, extreme-pressure agents, friction regulators, pH regulators, antiwear agents, oiliness improvers, and metal deactivators. However, additives which contain a metallic element are undesirable from the standpoint of the environment. One of those additives may be used alone, or a suitable combination of two or more thereof may be used. The total content of the additives in the lubricant composition is not particularly limited unless the additives defeat the objects of the invention.

### (Rolling Device)

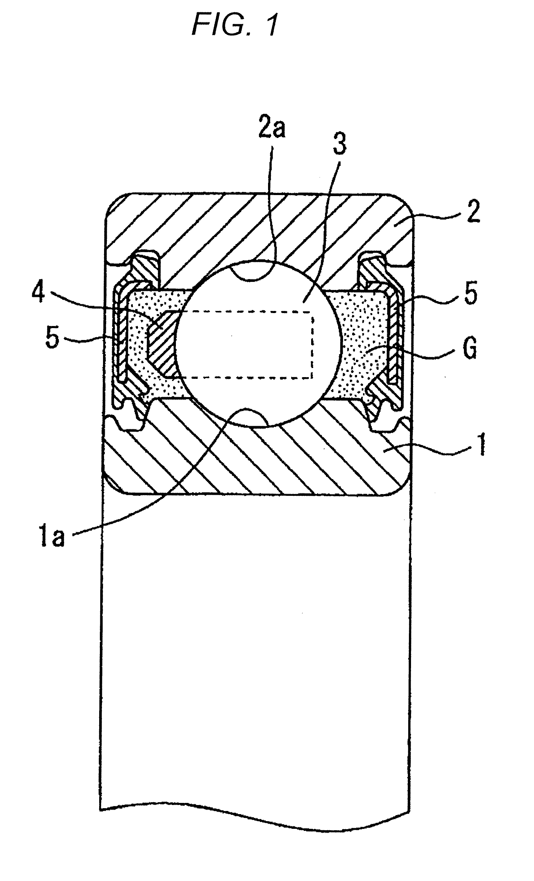

The rolling device of the invention is lubricated with the lubricant composition or grease composition described above. There are no limitations on the kind of the rolling device. Examples thereof include deep-groove ball bearings such as that shown in Fig. 1. The deep-groove ball bearing shown in the figure is equipped with: an inner ring 1 which has a raceway surface 1a in the outer circumferential surface thereof; an outer ring 2 which has, in the inner circumferential surface thereof, a raceway surface 2a that faces the raceway surface 1a and which has been disposed radially outside the inner ring 1; a plurality of rolling elements (balls) 3 which have been disposed between the two raceway surfaces 1a and 2a so as to be freely rollable; a cage 4 which holds the multiple rolling elements 3 between the inner ring 1 and the outer ring 2; and sealing devices 5 and 5 which serve as seals that close the space openings present between the inner ring 1 and the outer ring 2. Incidentally, the cage 4 and the sealing devices 5 may be omitted.

The grease composition described above is filled into the space (bearing space) which has been formed between the inner ring 1 and the outer ring 2 and in which the rolling elements 3 have been disposed, in order to lubricate between each raceway surface 1a or 2a and the rolling elements 3. Consequently, the rolling device of the invention has excellent durability and exerts little influence on the environment.

Incidentally, the embodiment shown is a mere example of the invention, and the invention should not be construed as being limited to the embodiment. For example, the invention can be applied to other rolling bearings of various kinds. The invention is applicable to radial rolling bearings such as angular ball bearings, self-aligning ball bearings, cylindrical roller bearings, tapered roller bearings, needle roller bearings, and self-aligning roller bearings and thrust rolling bearings such as thrust ball bearings and thrust roller bearings. Applications of the invention are not limited to such rolling bearings, and the invention is further applicable to other rolling devices of various kinds, such as, for example, ball screws, direct-acting guides, and direct-acting bearings.

### Examples

The invention will be further explained below by reference to Examples and Comparative Examples. However, the invention should not be construed as being limited by the Examples.

### <EXAMPLE A>

### (Test 1: Examples 1A to 3A and Comparative Examples 1A to 19A)

Thioctic acid (α-LI), d-α-tocopherol (V.E.), catechin (Kat), dibutylhydroxytoluene (BHT), isoflavone (IF), β-carotene (Car), and butylhydroxyanisole (BHA) were added alone or in combination as shown in Table 1 to a saturated medium-chain fatty acid triglyceride ("Panasate 875", manufactured by NOF Corp.) to prepare test lubricating oils. The addition amounts of those antioxidants were as follows. When an antioxidant compound was used alone, the compound was added in an amount of 2.5% by mass. When a mixture of two antioxidant compounds was used, each compound was added in an amount of 1.25% by mass, the total amount thereof being 2.5% by mass.

[Table 1]

**Table 1**

| Example 1A | Example 2A | Example 3A | |
|---|---|---|---|
| α-LI | α-LI | α-LI | |
| V.E. | Kat | | |
| | | | |

| Comparative Example 1A | Comparative Example 2A | Comparative Example 3A | Comparative Example 4A |
|---|---|---|---|
| BHT | V.E. | IF | Kat |
| | BHT | BHT | BHT |
| | | | |

| Comparative Example 5A | Comparative Example 6A | Comparative Example 7A | Comparative Example 8A |
|---|---|---|---|
| Car | BHA | V.E. | IF |
| BHT | BHT | | V.E. |
| | | | |

| Comparative Example 9A | Comparative Example 10A | Comparative Example 11A | Comparative Example 12A |
|---|---|---|---|
| Car | BHA | IF | Car |
| V.E. | V.E. | | IF |
| | | | |

| Comparative Example 13A | Comparative Example 14A | Comparative Example 15A | Comparative Example 16A |
|---|---|---|---|
| BHA | Kat | Car | BHA |
| IF | | Kat | Kat |
| | | | |

| Comparative Example 17A | Comparative Example 18A | Comparative Example 19A | |
|---|---|---|---|
| Car | BHA | BHA | |
| | Car | | |

| | | | |
|---|---|---|---|
| BHT: dibutylhydroxytoluene V.E.: d-α-tocopherol IF: isoflavone Kat: catechin Car: β-carotene α-LI: thioctic acid BHA: butylhydroxyanisole | | | |

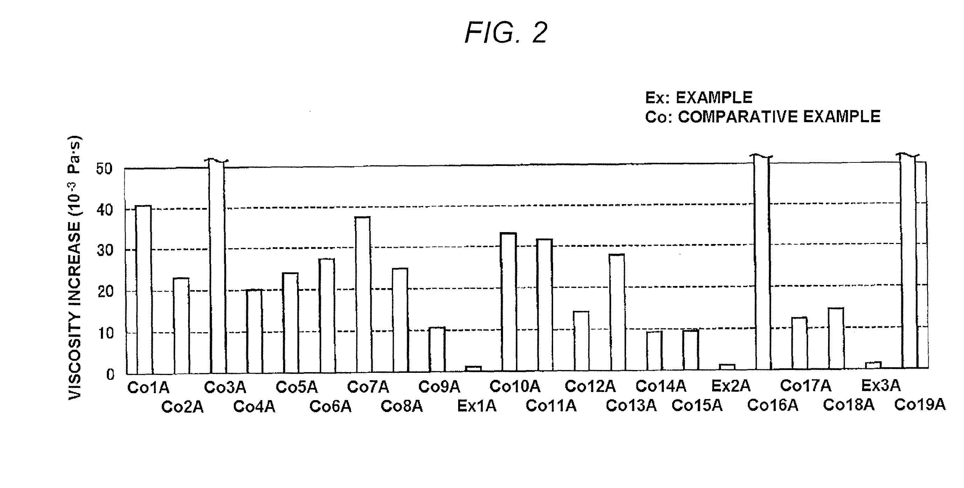

Forty grams of each test lubricating oil was placed on a stainless-steel petri dish and heated in a 160°C oven. The viscosity of the test lubricating oil was measured after a given period had passed, and the increase in viscosity from the value measured before the heating was determined. The results thereof are shown in Fig. 2. The test lubricating oils of Examples 1A to 3A contained thioctic acid alone or contained a mixture of thioctic acid with catechin or d-α-tocopherol. It can be seen that these lubricating oils were inhibited from suffering an increase in viscosity due to heating.

### (Test 2: Examples 4A to 8A and Comparative Examples 20A to 23A)

Thioctic acid, catechin, d-α-tocopherol, butylhydroxyanisole (BHA), dibutylhydroxytoluene (BHT), or phenyl-α-naphthylamine (PAN) was added to base greases each including both a base oil and a thickener, as shown in Table 2, to prepare test greases. As the base oil was used a saturated medium-chain fatty acid triglyceride (MCT) or a polyol ester oil. As the thickener, use was made of dextrin hexadecanoate, lithium 12-hydroxystearate, or a product of reaction between stearylamine and 4,4'-diphenylmethane diisocyanate (C18-MDI urea). The amounts of the thickeners in the base greases were 15% by mass for dextrin hexadecanoate, 12% by mass for lithium 12-hydroxystearate, and 15% by mass for the urea. Thus, the base greases had been regulated so as to have the shown consistency values.

[Table 2]

**Table 2**

| | Thickener | Viscosity of base oil (mm²/s, at 40°C) | Consistency | | Kind of Base oil | Composition of additive |
|---|---|---|---|---|---|---|
| | | | unworked | worked | | |
| Example 4A | dextrin hexadecanoate | 12.8 | 248 | 290 | MCT | thioctic acid, 2.5 mass% |
| Example 5A | dextrin hexadecanoate | 12.8 | 262 | 290 | MCT | thioctic acid, 1.25 mass% + catechin, 1.25 mass% |
| Example 6A | dextrin hexadecanoate | 12.8 | 262 | 292 | MCT | thioctic acid, 1.25 mass% + d-α-tocopherol, 1.25 mass% |
| Example 7A | lithium 12-hydroxystearate | 32.0 | 252 | 264 | polyol ester | thioctic acid, 1.25 mass% + catechin, 1.25 mass% |
| Example 8A | C18-MDI urea | 32.0 | 252 | 274 | polyol ester | thioctic acid, 1.25 mass% + catechin, 1.25 mass% |
| Comparative Example 20A | dextrin hexadecanoate | 12.8 | 255 | 286 | MCT | BHA, 2.5 mass% |
| Comparative Example 21A | dextrin hexadecanoate | 12.8 | 258 | 290 | MCT | BHA, 1.25 mass% + BHT, 1.25 mass% |
| Comparative Example 22A | lithium 12-hydroxystearate | 32.0 | 256 | 268 | polyol ester | BHT, 1.25 mass% + PAN, 1.25 mass% |
| Comparative Example 23A | C18-MDT urea | 32.0 | 250 | 270 | polyol ester | BHT, 1.25 mass% + PAN, 1.25 mass% |

| | | | | | | |
|---|---|---|---|---|---|---|
| C18-MDI urea: product of reaction between stearylamine and 4,4'-diphenylmethane diisocyanate MCT: saturated middle-chain fatty acid triglyceride BHA: butylhydroxyanisole BHT: dibutylhydroxytoluene PAN: phenyl-α-naphthylamine | | | | | | |

Thereafter, 3.4 g of each test grease was enclosed in bearing "6305VVC3E", manufactured by NSK Ltd., and the bearing was rotated under the conditions 1 and conditions 2 shown in Table 3 to determine the life. This test was conducted twice under each set of conditions.

[Table 3]

**Table 3**

| | Bearing | Axial load (N) | Rotation speed (rpm) | Grease amount (g) | Ambient temperature (°C) |
|---|---|---|---|---|---|
| Conditions 1 | 6305VVC3E | 198 | 15,000 | 3.4 | 80 |
| Conditions 2 | 6305VVC3E | 198 | 10,000 | 3.4 | 120 |

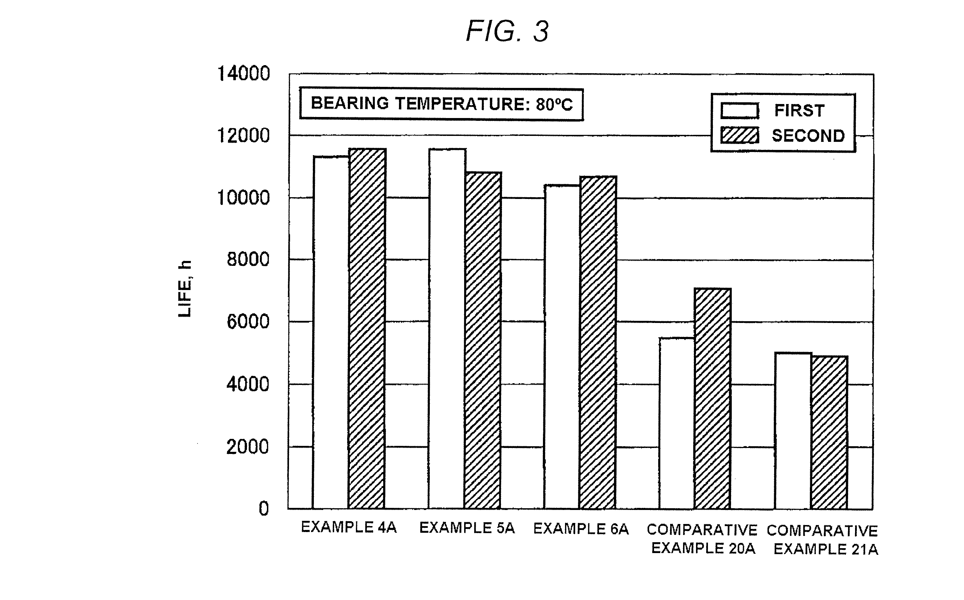

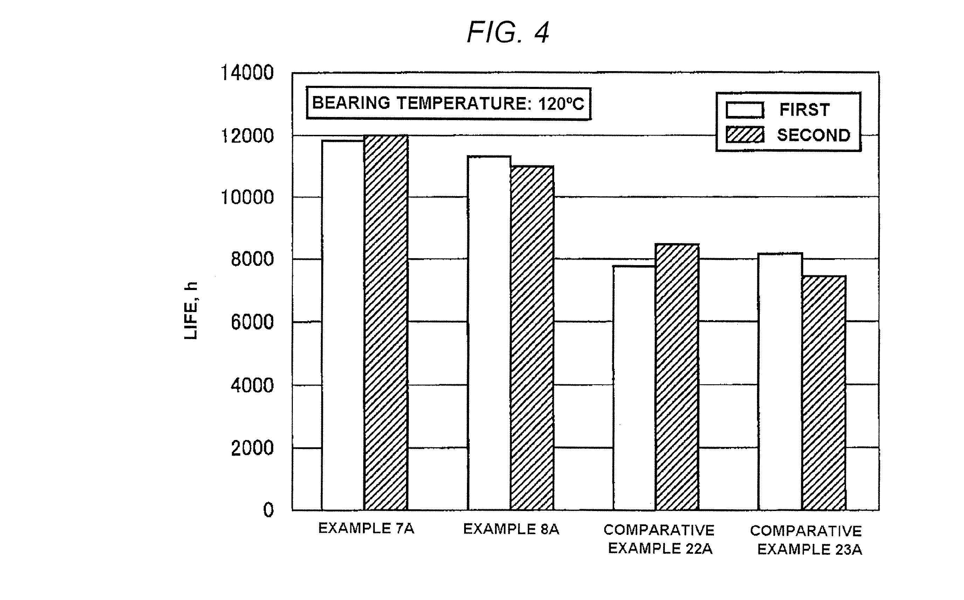

The results obtained under the conditions 1 are shown in Fig. 3, and the results obtained under the conditions 2 are shown in Fig. 4. It can be seen that the addition of thioctic acid alone or a mixture of thioctic acid and either catechin or d-α-tocopherol enhanced high-temperature durability and resulted in a prolongation of life, as in Examples 4A to 8A. In particular, as shown in Fig. 4, these antioxidants even at the high temperature showed a higher oxidation-preventing effect and brought about longer lives than the phenol/amine combination, which has conventionally been used as an industrial additive. Furthermore, such performance of the antioxidants according to the invention changed little when the base oil or the thickener changed.

### <EXAMPLE B>

Test greases were prepared in accordance with the formations shown in Table 4.

[Table 4]

**Table 4**

| | Thickener | Base oil | Antioxidant | Worked Consistency | Unworked Consistency |
|---|---|---|---|---|---|
| Example 1B | aluminum complex soap | MCT | dl-α-tocopherol | 292 | 262 |
| Example 2B | dextrin palmitate | MCT | d-α-tocopherol | 286 | 260 |
| Example 3B | dextrin palmitate | MCT | d-α-tocopherol + d-δ-tocopherol | 286 | 258 |
| Example 4B | urea compound | MCT | d-δ-tocopherol | 198 | 178 |
| Comparative Example 1B | lithium 12-hydroxystearate | polyol ester oil | dl-α-tocopherol | 187 | 174 |
| Comparative Example 2B | aluminum complex soap | MCT | dl-α-tocopherol | 289 | 258 |
| Comparative Example 3B | dextrin palmitate | MCT | d-α-tocopherol | 291 | 266 |
| Comparative Example 4B | dextrin palmitate | MCT | d-α-tocopherol + d-δ-tocopherol | 286 | 248 |
| Comparative Example 5B | urea compound | MCT | d-δ-tocopherol | 198 | 178 |
| Comparative Example 6B | dextrin palmitate | rapeseed oil | d-δ-tocopherol | 250 | 230 |
| Comparative Example 7B | dextrin palmitate | rapeseed oil | d-α-tocopherol + d-δ-tocopherol | 248 | 225 |

The grease of Example 1B was a grease which included a medium-chain fatty acid triglyceride (MCT) having a dynamic viscosity at 40°C of 12.8 mPa·s as a base oil and an aluminum complex soap as a thickener, and which had been obtained by adding an antioxidant and coenzyme Q10 to the base oil and thickener in an amount of 2.5% by mass each. The kind of the antioxidant added was dl-α-tocopherol as shown in Table 4.

The grease of Example 2B was a grease which included a medium-chain fatty acid triglyceride (MCT) having a dynamic viscosity at 40°C of 12.8 mPa·s as a base oil and dextrin palmitate as a thickener, and which had been obtained by adding an antioxidant and coenzyme Q10 to the base oil and thickener in an amount of 2.5% by mass each. The kind of the antioxidant added was d-α-tocopherol as shown in Table 4.

The grease of Example 3B was a grease which included a medium-chain fatty acid triglyceride (MCT) having a dynamic viscosity at 40°C of 12.8 mPa·s as a base oil and dextrin palmitate as a thickener, and which had been obtained by adding an antioxidant and coenzyme Q10 to the base oil and thickener in an amount of 2.5% by mass each. The kind of the antioxidant added was a natural type vitamin E which was on the market as a mixture of d-α-tocopherol and d-δ-tocopherol, as shown in Table 4.

The grease of Example 4B was a grease which included a medium-chain fatty acid triglyceride (MCT) having a dynamic viscosity at 40°C of 12.8 mPa·s as a base oil and a urea compound as a thickener, and which had been obtained by adding an antioxidant and coenzyme Q10 to the base oil and thickener in an amount of 2.5% by mass each. The kind of the antioxidant added was d-δ-tocopherol as shown in Table 4. The urea compound was a compound synthesized by reacting 1 mol of diphenylmethane 4,4'-diisocyanate (MDI) with 2 mol of stearylamine.

Incidentally, the amount of the thickener added in each of Examples 1B to 4B was 12% by mass. The values of worked consistency and unworked consistency of these test greases were as shown in Table 4.

The grease of Comparative Example 1B was a grease which included a polyol ester oil having a dynamic viscosity at 40°C of 32.6 mPa·s as a base oil and lithium 12-hydroxystearate as a thickener, and which had been obtained by adding an antioxidant to the base oil and thickener in an amount of 5% by mass. The kind of the antioxidant added was dl-α-tocopherol as shown in Table 4.

The grease of Comparative Example 2B was a grease which included a medium-chain fatty acid triglyceride (MCT) having a dynamic viscosity at 40°C of 12.8 mPa·s as a base oil and an aluminum complex soap as a thickener, and which had been obtained by adding an antioxidant to the base oil and thickener in an amount of 5% by mass. The kind of the antioxidant added was dl-α-tocopherol as shown in Table 4.

The grease of Comparative Example 3B was a grease which included a medium-chain fatty acid triglyceride (MCT) having a dynamic viscosity at 40°C of 12.8 mPa·s as a base oil and dextrin palmitate as a thickener, and which had been obtained by adding an antioxidant to the base oil and thickener in an amount of 5% by mass. The kind of the antioxidant added was d-α-tocopherol as shown in Table 4.

The grease of Comparative Example 4B was a grease which included a medium-chain fatty acid triglyceride (MCT) having a dynamic viscosity at 40°C of 12.8 mPa·s as a base oil and dextrin palmitate as a thickener, and which had been obtained by adding an antioxidant to the base oil and thickener in an amount of 5% by mass. The kind of the antioxidant added was a natural type vitamin E which was on the market as a mixture of d-α-tocopherol and d-δ-tocopherol, as shown in Table 4.

The grease of Comparative Example 5B was a grease which included a medium-chain fatty acid triglyceride (MCT) having a dynamic viscosity at 40°C of 12.8 mPa·s as a base oil and dextrin palmitate as a thickener, and which had been obtained by adding an antioxidant to the base oil and thickener in an amount of 5% by mass. The kind of the antioxidant added was d-δ-tocopherol as shown in Table 4. The urea compound was a compound synthesized by reacting 1 mol of diphenylmethane 4,4'-diisocyanate (MDI) with 2 mol of stearylamine.

The grease of Comparative Example 6B was a grease which included rapeseed oil having a dynamic viscosity at 40°C of 32 mPa·s as a base oil and dextrin palmitate as a thickener, and which had been obtained by adding an antioxidant to the base oil and thickener in an amount of 5% by mass. The kind of the antioxidant added was d-δ-tocopherol as shown in Table 4.

The grease of Comparative Example 7B was a grease which included rapeseed oil having a dynamic viscosity at 40°C of 32 mPa·s as a base oil and dextrin palmitate as a thickener, and which had been obtained by adding an antioxidant to the base oil and thickener in an amount of 5% by mass. The kind of the antioxidant added was a natural type vitamin E which was on the market as a mixture of d-α-tocopherol and d-δ-tocopherol, as shown in Table 4.

Incidentally, the amount of the thickener added in each of Comparative Examples 1B to 7B was 12% by mass. The values of worked consistency and unworked consistency of these test greases were as shown in Table 4. Comparative Examples 2B, 3B, 4B, and 5B are Reference Examples for ascertaining the effect of the coenzyme Q.

### [Life Test]

With respect to the test greases of Example 1B and Comparative Examples 1B and 2B, 3.4 g of each test grease was enclosed in rolling bearing No. 6305VVC3E, and this rolling bearing was rotated under the conditions of an ambient temperature of 120°C, an axial load of 98 N, and a rotation speed of 10,000 min⁻¹. The period required for the driving motor for rotating the rolling bearing to stop due to overload was measured, and this period was taken as the life.

With respect to the test greases of Examples 2B to 4B and Comparative Examples 3B to 5B, 1.0 g of each test grease was enclosed in rolling bearing No. 6303VVC3E, and this rolling bearing was rotated under the conditions of an ambient temperature of 80°C, a radial load of 198 N, and a rotation speed of 24,000 min⁻¹. The period required for the driving motor for rotating the rolling bearing to stop due to overload was measured, and this period was taken as the life.

Furthermore, with respect to the test greases of Comparative Examples 6B and 7B, 1.0 g of each test grease was enclosed in rolling bearing No. 6303VVC3E, and this rolling bearing was rotated under the conditions of an ambient temperature of 80°C, a radial load of 198 N, and a rotation speed of 24,000 min⁻¹. The period required for the driving motor for rotating the rolling bearing to stop due to overload was measured, and this period was taken as the life.

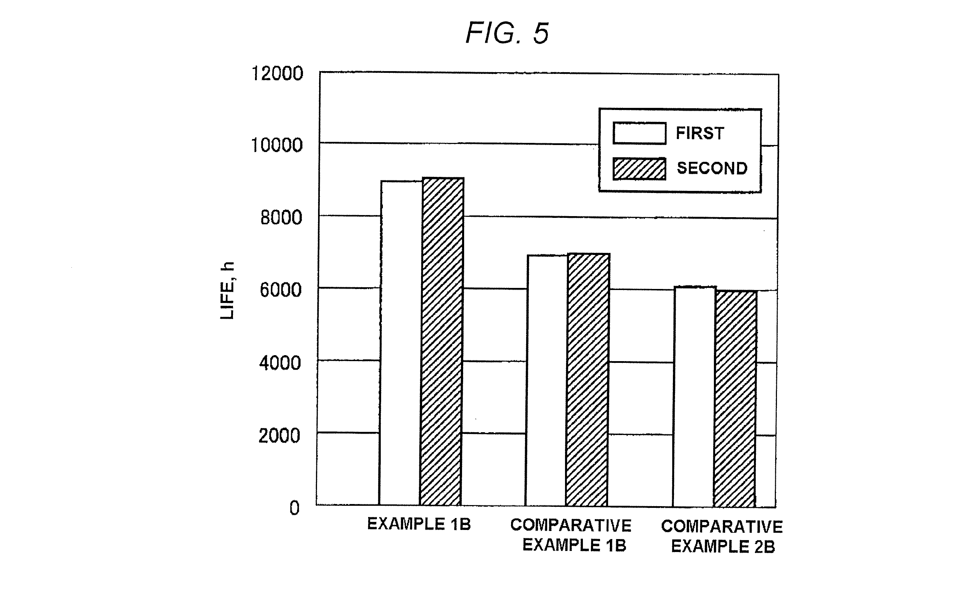

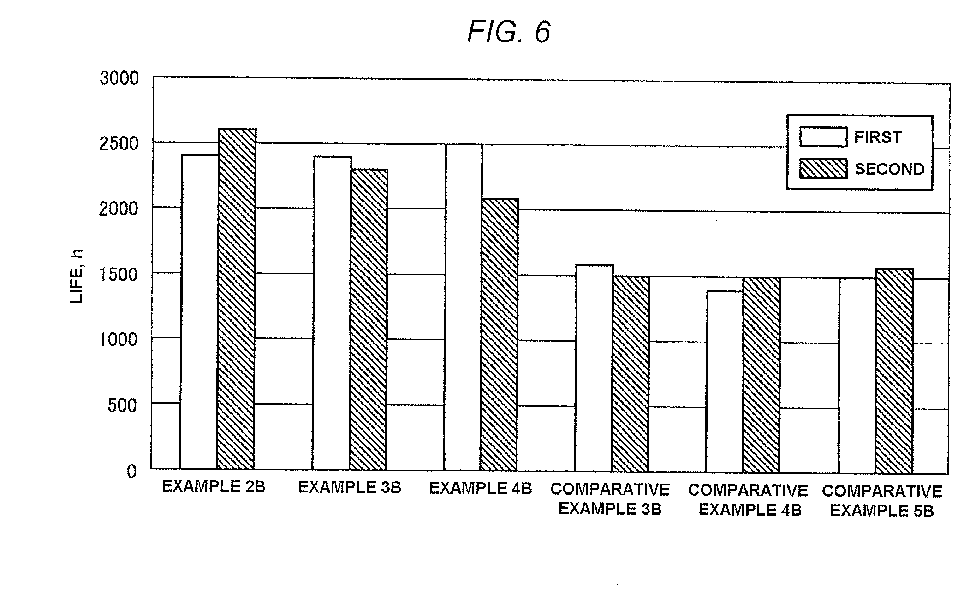

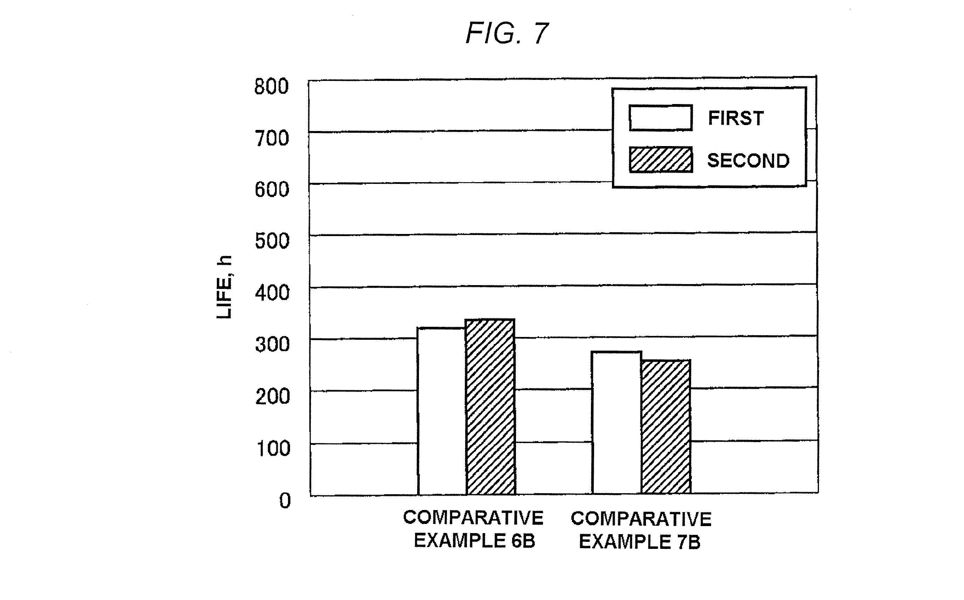

Incidentally, the life test was conducted twice for each test grease. The results thereof are shown as graphs in Figs. 5 to 7. As can be seen from the graphs given in Figs. 5 to 7, the Examples, in which the test greases each contained coenzyme Q10, attained a longer life than the Comparative Examples, in which the test greases did not contain coenzyme Q10.

### <EXAMPLE C>

### (Example 1C)

Eighty-five grams of a saturated medium-chain fatty acid triglyceride having a dynamic viscosity at 40°C of 14.8 mm²/s (Panasate 875, manufactured by NOF Corp.) was mixed with 15 g of magnesium stearate, and this mixture was heated, with stirring, to a temperature at which the magnesium stearate dissolved. After the magnesium stearate had dissolved completely, the solution was poured into an aluminum vat which had been cooled beforehand. This vat was cooled with flowing water. The mixture which had become greasy was kneaded with a three-roll mill to obtain a test grease. This test grease had a value of worked consistency of 300.

### (Comparative Example 1C)

Eighty-eight grams of a saturated medium-chain fatty acid triglyceride having a dynamic viscosity at 40°C of 14.8 mm²/s (Panasate 875, manufactured by NOF Corp.) was mixed with 12 g of lithium 12-hydroxystearate, and this mixture was heated, with stirring, to a temperature at which the lithium 12-hydroxystearate dissolved. After the lithium 12-hydroxystearate had dissolved completely, the solution was poured into an aluminum vat which had been cooled beforehand. This vat was cooled with flowing water. The mixture which had become greasy was kneaded with a three-roll mill to obtain a test grease. This test grease had a value of worked consistency of 231.

### (Comparative Example 2C)

Eighty-eight grams of a polyol ester oil having a dynamic viscosity at 40°C of 26.0 mm²/s was mixed with 12 g of lithium 12-hydroxystearate, and this mixture was heated, with stirring, to a temperature at which the lithium 12-hydroxystearate dissolved. After the lithium 12-hydroxystearate had dissolved completely, the solution was poured into an aluminum vat which had been cooled beforehand. This vat was cooled with flowing water. The mixture which had become greasy was kneaded with a three-roll mill to obtain a test grease. This test grease had a value of worked consistency of 250.

### [Rotation Torque Test]

Each of the test greases thus produced was filled, in an amount of 1.0 g, into the bearing space of deep-groove ball bearing No. 6203VV (inner diameter, 17 mm; outer diameter, 40 mm). Thus, three test bearings were obtained. These test bearings were subjected to a rotation test at various rotation speeds (1,800-7,500 min⁻¹) and examined for rotation torque. The axial load was set at 196 N, and the test temperature was room temperature.

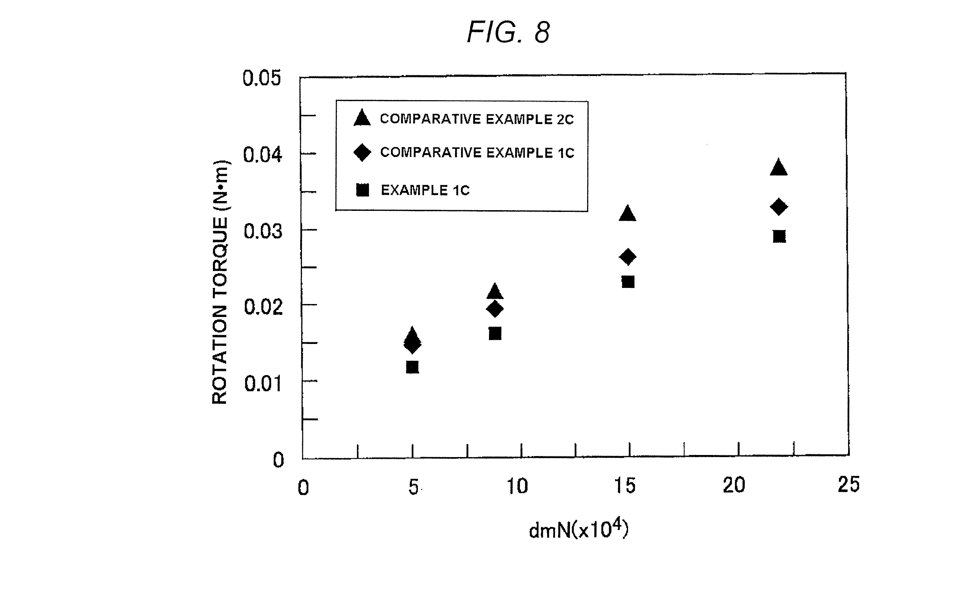

The rotation torque was measured throughout the period from the time when 550 seconds had passed since the initiation of rotation to the time when 600 seconds had passed since the rotation initiation, and the average value thereof was taken as the rotation torque of this test bearing. The results thereof are shown as a graph in Fig. 8. The abscissa of the graph in Fig. 8 is the value of dmN determined from the rotation speed during the test. As can be seen from the graph given in Fig. 8, the test bearing equipped with the test grease of Example 1C showed excellent low-torque characteristics at each rotation speed as compared with the test bearings equipped with the test greases of Comparative Examples 1C and 2C.

### <EXAMPLE D>

### (Example 1D)

Eighty-five grams of a saturated medium-chain fatty acid triglyceride having a dynamic viscosity at 40°C of 14.8 mm²/s (Panasate 875, manufactured by NOF Corp.) was mixed with 15 g of calcium stearate, and this mixture was heated, with stirring, to a temperature at which the calcium stearate dissolved. After the calcium stearate had dissolved completely, the solution was poured into an aluminum vat which had been cooled beforehand. This vat was cooled with flowing water. The mixture which had become greasy was kneaded with a three-roll mill to obtain a test grease. This test grease had a value of worked consistency of 230.

### (Comparative Example 1D)

Eighty-eight grams of a saturated medium-chain fatty acid triglyceride having a dynamic viscosity at 40°C of 14.8 mm²/s (Panasate 875, manufactured by NOF Corp.) was mixed with 12 g of lithium 12-hydroxystearate, and this mixture was heated, with stirring, to a temperature at which the lithium 12-hydroxystearate dissolved. After the lithium 12-hydroxystearate had dissolved completely, the solution was poured into an aluminum vat which had been cooled beforehand. This vat was cooled with flowing water. The mixture which had become greasy was kneaded with a three-roll mill to obtain a test grease. This test grease had a value of worked consistency of 231.

### (Comparative Example 2D)

Eighty-eight grams of a polyol ester oil having a dynamic viscosity at 40°C of 26.0 mm²/s was mixed with 12 g of lithium 12-hydroxystearate, and this mixture was heated, with stirring, to a temperature at which the lithium 12-hydroxystearate dissolved. After the lithium 12-hydroxystearate had dissolved completely, the solution was poured into an aluminum vat which had been cooled beforehand. This vat was cooled with flowing water. The mixture which had become greasy was kneaded with a three-roll mill to obtain a test grease. This test grease had a value of worked consistency of 250.

### [Rotation Torque Test]

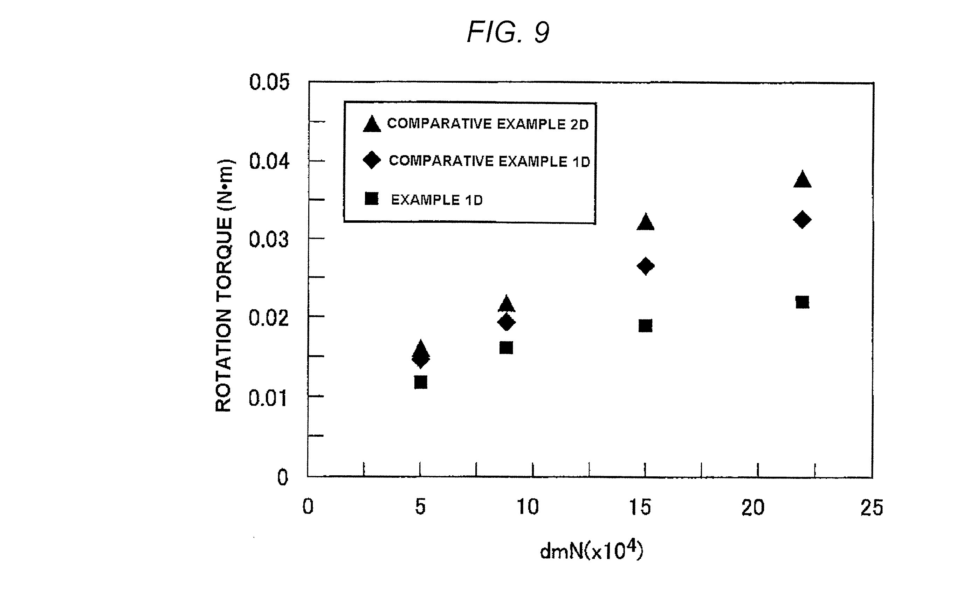

A rotation torque test was conducted in the same manner as in Example C. The results thereof are shown as a graph in Fig. 9. The abscissa of the graph in Fig. 9 is the value of dmN determined from the rotation speed during the test. As can be seen from the graph given in Fig. 9, the test bearing equipped with the test grease of Example 1D showed excellent low-torque characteristics at each rotation speed as compared with the test bearings equipped with the test greases of Comparative Examples 1D and 2D.

While the invention has been described in detail and with reference to specific embodiments thereof, it will be apparent to one skilled in the art that various changes and modifications can be made therein without departing from the spirit and scope thereof.

This application is based on a Japanese patent application filed on June 15, 2011 (Application No. 2011-133118), a Japanese patent application filed on November 30, 2011 (Application No. 2011-262944), and a Japanese patent application filed on November 30, 2011 (Application No. 2011-262945), the contents thereof being incorporated herein by reference.

### Industrial Applicability

The lubricant compositions and rolling device of the invention are useful in or as the rotating parts or sliding parts of various machines and apparatus. The lubricant compositions are harmless even when eaten, and impose little burden on the environment. Consequently, the lubricant compositions and the rolling device are useful especially in machines and apparatus which relate to foods or medical supplies.

### Description of Reference Numerals and Signs

- 1: Inner ring
- 1a: Raceway surface
- 2: Outer ring
- 2a: Raceway surface
- 3: Rolling element
- G: Lubricant composition

## Claims

1. A lubricant composition which comprises a saturated fatty acid triglyceride and an antioxidant.

2. The lubricant composition as claimed in claim 1, wherein the antioxidant comprises at least one member selected from phenols, polyphenols, flavonoids, carotenoids, vitamins, vitamin analogues, and organic acids.

3. The lubricant composition as claimed in claim 1 or 2, which contains a coenzyme Q.

4. The lubricant composition as claimed in any one of claims 1 to 3, which contains a fatty acid ester, a metal soap, or a urea compound as a thickener.

5. A lubricant composition which comprises a saturated fatty acid triglyceride as a base oil and either magnesium stearate or calcium stearate as a thickener.

6. A rolling device equipped with an inner member which has a raceway surface in the outer surface thereof, an outer member which has a raceway surface that faces the raceway surface of the inner member and which has been disposed outside the inner member, a plurality of rolling elements which have been disposed between the two raceway surfaces so as to be freely rollable, and a lubricant which lubricates between each raceway surface and the rolling elements, wherein the lubricant is the lubricant composition according to any one of claims 1 to 5.
